# DEMANDE DE BREVET EUROPEEN

(11) **EP 2 555 151 A1**
(43) Date de publication de la demande: **06.02.2013**
(21) Numéro de dépôt: 12178591.9
(22) Date de dépôt: 31.07.2012
(51) Int. Cl.: G06Q 30/06

(54) **Système de commande à distance**

(30) Priorité: 01.08.2011 FR 1157016
(71) Demandeur: Itama S.A., 1630 Luxembourg (LU)
(72) Inventeur: Dupret, Cyril, 69560 Sainte Colombe (FR)
(74) Mandataire: Verriest, Philippe

(57) **Abrégé**

La présente invention concerne un système de commande à distance comprenant un serveur (2) et au moins un terminal portable (3) équipé de moyens de communication en réseau (8) susceptible de permettre l'établissement d'une connexion avec le serveur (2), le terminal portable comprenant également des moyens de traitement (13). Le terminal (3) portable comprend des moyens de stockage (9) des données de catalogue (ctg), les moyens de traitement (13) du terminal et/ou des moyens de traitement (4) du serveur étant agencés pour associer les données de catalogues (ctg) avec des données correspondant à une période de validité, et pour opérer une mise à jour des données de catalogue (ctg) stockés dans les moyens de stockage (9) du terminal à partir des données de catalogue stockées dans les moyens de stockage du serveur (7) de façon à conserver dans les moyens de stockage (9) du terminal (3) des données de catalogue dont la période de validité est en cours. Le terminal comprend en outre des moyens de stockage (10) d'une commande en cours, l'application (17) destinée à constituer une commande (cmd) à partir d'articles référencés dans un catalogue comprenant les données de catalogue (ctg) utilisant les données de catalogues stockées dans les moyens de stockage (9) de catalogue du terminal portable (3) pour constituer ladite commande (cmd), les données relatives à la commande n'étant transmise à un serveur comprenant des moyens de traitement (5) de la commande (cmd) pouvant être le serveur comprenant les moyens de stockage de catalogue (7) ou un serveur distinct lorsque la commande est complétée.

## Description

La présente invention a pour objet un système de commande à distance.

Il est connu d'utiliser un tel système de commande à distance comprenant un serveur comportant des moyens de stockage de données de catalogue et des moyens de communication en réseau et au moins un terminal portable équipé de moyens de communication en réseau susceptibles de permettre l'établissement d'une connexion avec le serveur. Le terminal portable comprend également des moyens de traitement et des moyens d'interface utilisateur permettant l'affichage de données en vue de la consultation par un utilisateur et l'entrée d'instructions ou la réalisation de sélections par ledit utilisateur. Les moyens de traitement sont agencés pour exécuter une application destinée à constituer une commande à partir d'articles référencés dans un catalogue comprenant les données de catalogue.

Un tel type de dispositif connu permet de réaliser une commande en ligne en utilisant un terminal portable de façon similaire à un ordinateur fixe.

Il apparaît toutefois que la disponibilité du réseau n'est pas toujours garantie lors de l'utilisation d'un terminal portable, ce qui peut conduire à des indisponibilités du service offert par le système. En outre, le débit de données sur un terminal portable peut conduire à une expérience d'utilisation insatisfaisante pour l'utilisateur lorsque celui-ci recherche les produits qu'il souhaite commander.

La présente invention a pour but de résoudre tout ou partie des inconvénients mentionnés ci-dessus.

A cet effet, la présente invention a pour objet un système du type précité **caractérisé en ce que** le terminal portable comprend des moyens de stockage des données de catalogue, les moyens de traitement du terminal et/ou des moyens de traitement du serveur étant agencés pour associer les données de catalogues avec des données correspondant à une période de validité,
les moyens de traitement du terminal et/ou des moyens de traitement du serveur sont agencés pour opérer une mise à jour des données de catalogue stockés dans les moyens de stockage du terminal portable à partir des données de catalogue stockées dans les moyens de stockage du serveur de façon à conserver dans les moyens de stockage du terminal des données de catalogue dont la période de validité est en cours,
le terminal portable comprenant en outre des moyens de stockage d'une commande en cours, l'application étant agencée pour constituer une commande à partir d'articles référencés dans un catalogue utilisant les données de catalogues stockées dans les moyens de stockage de catalogue du terminal portable pour constituer ladite commande,

les moyens de traitement du terminal portable étant agencés pour transmettre les données relatives à la commande lorsque la commande est validée par l'utilisateur à un serveur comprenant des moyens de traitement de la commande pouvant être le serveur comprenant les moyens de stockage de catalogue ou un serveur distinct,

le terminal portable comprenant des moyens de reconnaissance d'une référence portée par un produit, l'application destinée à réaliser la constitution d'une commande étant agencée pour ajouter à ladite commande une ligne de commande sur la base de la référence communiquée par les moyens de reconnaissance.

Ces dispositions permettent de procéder à la constitution d'une commande à partir d'une liste de références contenue dans les moyens de stockage locaux du téléphone, tout en conservant l'assurance que les références sont dans leur période de validité.

Il est ainsi possible de constituer la commande sans utiliser les moyens de communications du terminal, l'expérience pour l'utilisateur étant ainsi améliorée car les accès aux données nécessaires sont réalisés de façon locale sur le terminal. En conséquence, ces accès sont rapides, et garantis, contrairement à des accès par un réseau pouvant être plus lent, voire momentanément impossibles en l'absence de connexion.

En outre, la commande peut être réalisée en plusieurs fois en étant stockée sur le terminal, sans nécessité de connexion au serveur distant pour reprendre la constitution de la commande. La commande n'est transmise au serveur que lorsqu'elle est validée par l'utilisateur.

Les mises à jour sont réalisées de façon ponctuelle, lorsqu'une connexion réseau est disponible.

Ces dispositions permettent par exemple de réaliser l'entrée d'une référence correspondant à un produit à disposition de l'utilisateur afin de prévoir le rachat de celui-ci, sans avoir à rechercher le produit dans le catalogue. Ces dispositions sont également avantageuses en liaison avec la possibilité de constituer la commande hors ligne. En effet, l'application sur le terminal portable permet de rechercher directement la référence correspondant à l'information lue sur le produit dans le catalogue disponible localement sur le terminal portable et d'ajouter la référence dans la commande en cours de constitution.

Selon un aspect de l'invention, les moyens de traitement du terminal et/ou des moyens de traitement du serveur sont agencés pour opérer une vérification de la disponibilité de la connexion entre le serveur et le terminal portable avant de procéder à la mise à jour des données de catalogue stockées dans les moyens de stockage du terminal portable, et pour prévoir au moins une seconde tentative de mise à jour si la connexion n'est pas disponible.

Ces dispositions permettent de mettre en oeuvre facilement les mises à jour dans des conditions où les connexions réseaux sont disponibles de façon intermittentes.

Selon un aspect de l'invention, les moyens de stockage des données de catalogue du terminal portable sont agencés pour stocker temporairement des données relatives à plusieurs périodes de validités successives.

Ces dispositions permettent d'anticiper la mise à jour des données de catalogue pour la période de validité suivante.

Selon un aspect de l'invention, les moyens de traitement du serveur sont agencés pour déclencher la mise à jour des données de catalogue dans les moyens de stockage suite à une détection de la disponibilité de données de catalogue pour une nouvelle période de validité dans les moyens de stockage du serveur.

Selon un aspect de l'invention, les moyens de reconnaissance sont des moyens de type optique, en particulier des moyens de capture d'image et des moyens de traitement de l'image ainsi obtenue.

Ces dispositions permettent notamment de procéder à la reconnaissance de code-barres.

Selon un autre aspect de l'invention, les moyens de stockage des données de catalogues sont agencés pour stocker des données relatives à au moins deux points de vente potentiels.

Selon d'autres aspect de l'invention, il peut être prévu que :
- le terminal portable est un téléphone portable.
- l'application est une application téléchargeable.
- le terminal portable est muni de moyens de paiement intégrés.

De toute façon, l'invention sera bien comprise à l'aide de la description qui suit, en référence au dessin schématique annexé représentant, à titre d'exemple non limitatif, un dispositif selon l'invention.
La figure 1 est un schéma du principe représentant un mode de réalisation du système selon l'invention.
La figure 2 est une représentation du contenu des données de catalogue et des données de commande.
La figure 3 est une représentation de la comparaison d'une même commande auprès de deux points de vente distincts.

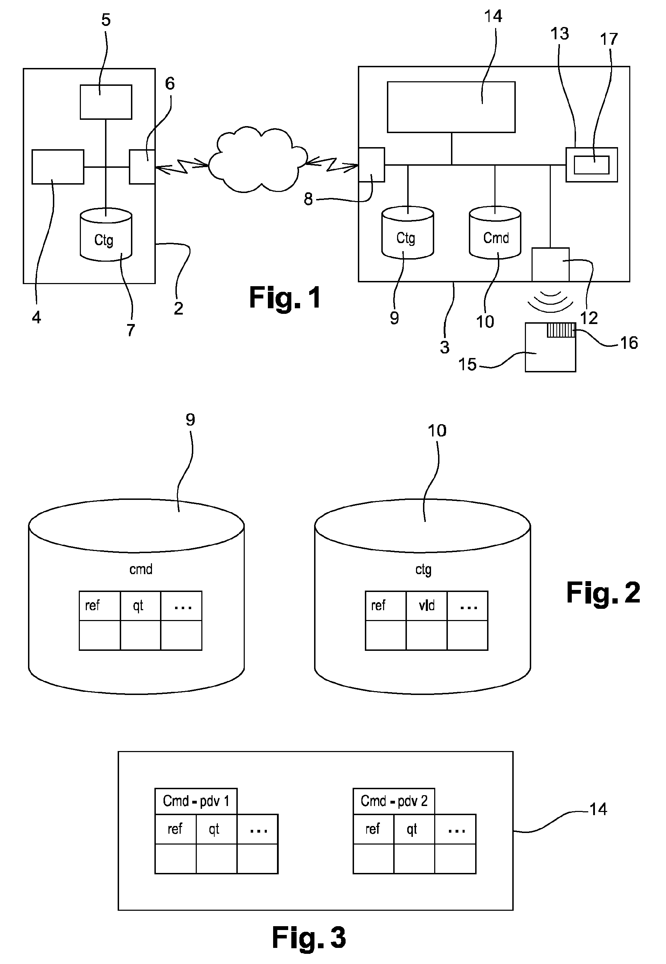

Comme cela est représenté sur la figure 1, un système de commande à distance selon l'invention comprend un serveur 2 relié à une pluralité de terminaux portables 3 à disposition d'une pluralité d'utilisateur.

Le serveur 2 comporte des moyens de stockage 4 de données de catalogue ctg et des moyens de communication en réseau 6.

Chaque terminal portable 3 comprend des moyens de communication en réseau 8 susceptible de permettre l'établissement d'une connexion avec le serveur 2. Chaque terminal portable comprend également des moyens de traitement 13 comprenant au moins un microprocesseur et des moyens d'interface utilisateur 14 comprenant par exemple un écran et un clavier ou un écran tactile permettant l'affichage de donnée en vue de la consultation par un utilisateur et l'entrée d'instructions ou la réalisation de sélections par l'utilisateur.

Le terminal portable 3 comprend en outre des moyens de stockage 9 des données de catalogue ctg de façon locale et des moyens de stockage 10 d'une commande en cours cmd.

Les moyens de traitement 13 du terminal portable 3 sont agencés pour exécuter une application 17 destinée à constituer une commande cmd à partir d'articles référencés dans un catalogue comprenant les données de catalogue ctg stockées de façon locale dans les moyens de stockage 9,

Comme cela est représenté sur la figure 2, les moyens de traitement 13 du terminal et/ou des moyens de traitement 4 du serveur sont agencés pour associer les données de catalogues ctg constituées par un ensemble de référence ref avec des données correspondant à une période de validité vld. Les informations relatives à la période de validité peuvent notamment contenir une date de début de validité et une date de fin de validité, ou encore une date de référence et une durée de validité. Les moyens de traitement 13 comprennent une fonctionnalité d'horloge leur permettant de comparer la date courante et la période de validité afin d'identifier si une référence est ou non dans sa période de validité.

Des mises à jour des données de catalogue ctg stockées dans les moyens de stockage 9 du terminal à partir des données de catalogue stockées dans les moyens de stockage du serveur 7 sont effectuées par les moyens de traitement 13 du terminal portable de façon à conserver dans les moyens de stockage 9 du terminal 3 des données de catalogue dont la période de validité vld est en cours.

Le déclenchement de l'opération de mise à jour peut être réalisé de façon périodique ou par une détection de l'approche d'une date de fin de période de validité d'une référence stockée dans le catalogue par les moyens de traitement 13 ou les moyens de traitement 4.

Le déclenchement de l'opération de mise à jour comprend une étape préalable de vérification de la disponibilité de la connexion entre le terminal et le serveur.

En cas de non disponibilité, la mise à jour est reportée. Il est donc souhaitable de prévoir un délai suffisant avant la fin de la période de validité des données de catalogue pour permettre la réalisation de plusieurs tentatives de mise à jour.

Les opérations de mises à jour peuvent être déclenchées par les moyens de traitement du serveur, suite par exemple à une détection de la disponibilité de données de catalogue pour une nouvelle période de validité.

Des données relatives à plusieurs périodes de validités successives peuvent coexister temporairement dans les moyens de stockage du terminal, pour permettre d'anticiper la mise à jour des données de catalogue pour la période de validité suivante. Les moyens de traitement utilisent les données relatives à la période de validité en cours dans ce cas.

L'application 17 destinée à constituer une commande cmd à partir d'articles référencés dans un catalogue comprenant les données de catalogue ctg utilise les données de catalogues stockées dans les moyens de stockage 9 de catalogue du terminal portable 3 pour constituer ladite commande cmd.

Les données relatives à la commande ne sont transmise à un serveur comprenant des moyens de traitement 5 de la commande cmd pouvant être le serveur comprenant les moyens de stockage de catalogue 7 ou un serveur distinct que lorsque la commande est validée.

Il est à noter qu'il est possible que la constitution d'une commande s'étende dans le temps sur plusieurs périodes de validité pour au moins l'une des références considérées. Dans ce cas, ce sont les données de référence au moment de la validation de la commande qui sont prises en compte. Par exemple, dans le cas d'une première période de validité sur le mois de janvier et une seconde période de validité correspondant au mois de février pour un produit donné, si la constitution de la commande est commencée en janvier mais validée au mois de février, les données de catalogue utilisées seront celles de février.

Selon une variante, l'utilisateur peut être notifié lorsqu'une référence présente dans sa commande est relative à une référence dont les données ont été modifiées suite à une mise à jour des données de catalogue.

Les moyens de traitement 5 de la commande permettent de traiter celle-ci pour réaliser la préparation de la commande en vue de sa livraison ou de sa mise à disposition au niveau d'un point de vente.

Le traitement de la commande comprend également une étape de facturation de ladite commande, qui peut être réalisée en ligne ou lors du retrait de la commande.

Comme cela est représenté sur la figure 1 , le terminal portable comprend des moyens de reconnaissance d'une référence 16 portée par un produit 15, l'application destinée à réaliser la constitution d'une commande étant agencée pour ajouter à ladite commande une ligne de commande sur la base de la référence communiquée par les moyens de reconnaissance 16.

Les moyens de reconnaissance 16 comprennent des moyens de capture d'image constitués par l'appareil photo ou la caméra présente sur le terminal portable et des moyens de traitement de l'image ainsi obtenue, comprenant par exemple un composant logiciel de reconnaissance de code-barres. Ainsi, à partir du code-barres, un identifiant Gencod du produit considéré peut être déterminé, ce qui identifie le produit considéré.

Selon une variante, des moyens de reconnaissance vocale peuvent être prévus dans l'application, destinés à reconnaître une référence par la parole, en utilisant par exemple des mots-clés. Dans ce cas, l'application est agencée pour proposer le ou les résultats obtenus sur la base de la reconnaissance effectuée et pour faire confirmer ou préciser son choix à l'utilisateur, par exemple en indiquant une quantité ou un type de conditionnement à l'utilisateur, en utilisant également de préférence les moyens de reconnaissance vocale.

Selon une variante, les moyens de stockage des données de catalogues sont agencés pour stocker des données relatives à au moins deux points de vente potentiels. Ainsi, l'application est en mesure de simuler la commande et notamment le prix de celle-ci dans le cas d'une commande auprès du premier et du second point de vente, et de présenter ces éléments à l'utilisateur sur un écran des moyens d'interface utilisateur 14 comme cela est illustré sur la figure 3.

Les terminaux portables 3 peuvent notamment être constitués par des téléphones portables munis d'une connexion internet, l'application 17 étant dans ce cas de préférence une application téléchargeable.

Selon une variante, le terminal portable est muni de moyens de paiement intégrés.

Il apparaît bien entendu que les différents modes de réalisations détaillés ci-dessus ne constituent que des exemples de mises en oeuvre de l'invention telle que définie par les revendications ci-jointes. Des variantes de ces différents modes de réalisations peuvent être envisagées et les différents modes de réalisations décrits peuvent être combinés de façon aisée par l'homme du métier.

## Revendications

1. Système de commande à distance comprenant un serveur (2) comportant des moyens de stockage (4) de données de catalogue (ctg) et des moyens de communication en réseau (6) et au moins un terminal portable (3) équipé de moyens de communication en réseau (8) susceptibles de permettre l'établissement d'une connexion avec le serveur (2), le terminal portable comprenant également des moyens de traitement (13) et des moyens d'interface utilisateur (14) permettant l'affichage de données en vue de la consultation par un utilisateur et l'entrée d'instructions ou la réalisation de sélections par ledit utilisateur, les moyens de traitement (13) étant agencés pour exécuter une application (17) destinée à constituer une commande (cmd) à partir d'articles référencés dans un catalogue comprenant les données de catalogue (ctg),
**Caractérisé en ce que**
le terminal (3) portable comprend des moyens de stockage (9) des données de catalogue (ctg), les moyens de traitement (13) du terminal et/ou des moyens de traitement (4) du serveur étant agencés pour associer les données de catalogues (ctg) avec des données correspondant à une période de validité (vld),
les moyens de traitement (13) du terminal et/ou des moyens de traitement (4) du serveur sont agencés pour opérer une mise à jour des données de catalogue (ctg) stockés dans les moyens de stockage (9) du terminal portable à partir des données de catalogue stockées dans les moyens de stockage du serveur (7) de façon à conserver dans les moyens de stockage (9) du terminal (3) des données de catalogue dont la période de validité (vld) est en cours,
le terminal (3) portable comprenant en outre des moyens de stockage (10) d'une commande (cmd) en cours, l'application (17) étant agencée pour constituer une commande (cmd) à partir d'articles référencés dans un catalogue utilisant les données de catalogues stockées dans les moyens de stockage (9) de catalogue du terminal portable (3) pour constituer ladite commande (cmd),
les moyens de traitement (13) du terminal portable étant agencés pour transmettre les données relatives à la commande lorsque la commande est validée par l'utilisateur à un serveur comprenant des moyens de traitement (5) de la commande (cmd) pouvant être le serveur (2) comprenant les moyens de stockage de catalogue (7) ou un serveur distinct,
le terminal portable comprenant des moyens de reconnaissance d'une référence (16) portée par un produit (15), l'application destinée à réaliser la constitution d'une commande étant agencée pour ajouter à ladite commande une ligne de commande sur la base de la référence communiquée par les moyens de reconnaissance (16).

2. Système selon la revendication 1, dans lequel les moyens de traitement (13) du terminal et/ou des moyens de traitement (4) du serveur sont agencés pour opérer une vérification de la disponibilité de la connexion entre le serveur (2) et le terminal portable (3) avant de procéder à la mise à jour des données de catalogue (ctg) stockées dans les moyens de stockage (9) du terminal portable, et pour prévoir au moins une seconde tentative de mise à jour si la connexion n'est pas disponible.

3. Système selon l'une des revendications précédentes, dans lequel les moyens de stockage (9) des données de catalogue (ctg) du terminal portable (3) sont agencés pour stocker temporairement des données relatives à plusieurs périodes de validités (vld) successives.

4. Système selon l'une des revendications précédentes, dans lequel les moyens de traitement (4) du serveur (2) sont agencés pour déclencher la mise à jour des données de catalogue (ctg) dans les moyens de stockage (9) suite à une détection de la disponibilité de données de catalogue pour une nouvelle période de validité (vld) dans les moyens de stockage (7) du serveur (2).

5. Système selon l'une des revendications précédentes, dans lequel les moyens de reconnaissance (16) sont des moyens de type optique, en particulier des moyens de capture d'image et des moyens de traitement de l'image ainsi obtenue.

6. Système selon l'une des revendications précédentes, dans lequel les moyens de stockage des données de catalogues sont agencés pour stocker des données relatives à au moins deux points de vente potentiels.

7. Système selon l'une des revendications précédentes, dans lequel le terminal portable (3) est un téléphone portable.

8. Système selon l'une des revendications précédentes, dans lequel l'application (17) est une application téléchargeable.

9. Système selon l'une des revendications précédentes, dans lequel le terminal portable (3) est muni de moyens de paiement intégrés.
